# EUROPÄISCHE PATENTSCHRIFT

(11) **EP 2 371 887 B1**
(45) Veröffentlichungstag und Bekanntmachung des Hinweises auf die Patenterteilung: **27.06.2018**
(21) Anmeldenummer: 11160565.5
(22) Anmeldetag: 31.03.2011
(51) Int. Cl.: C08K 3/10

(54) **Polymermaterial, umfassend ein Polymer und hierin dispergierte Silber-Nanopartikel**
Polymaterial comprising a polymer and silver nanoparticles dispersed in same
Matériau polymère comprenant un polymère et nanoparticule d'argent y étant dispersée

(30) Priorität: 01.04.2010 EP 10003664
(43) Veröffentlichungstag der Anmeldung: 05.10.2011
(73) Patentinhaber: Parker-Hannifin Corporation, Cleveland, OH 44124 (US)
(72) Erfinder: Cochet, Ayse, 51067, Köln (DE); Wagner, Joachim, 51061, Köln (DE); Jenninger, Werner, 50677, Köln (DE); Rudhardt, Daniel, 50827, Köln (DE); Eiden, Stefanie, 51371, Leverkusen (DE)
(74) Vertreter: Cohausz & Florack

(56) Entgegenhaltungen:
- EP-A1- 2 163 329
- WO-A2-2005/079353
- WO-A2-2006/071419
- US-A- 5 977 685
- US-A1- 2009 072 658
- US-B1- 6 376 971

## Beschreibung

Die vorliegende Erfindung betrifft ein Polymermaterial, welches ein Polymer und in diesem Polymer dispergierte Silber-Nanopartikel umfasst. Solch ein Material eignet sich insbesondere zur Verwendung als Elektrode. Insbesondere betrifft die vorliegende Erfindung ein Polymermaterial nach Patentanspruch 1. Beschrieben ist zudem ein Verfahren zur Herstellung eines solchen Polymermaterials. Die Erfindung betrifft weiterhin einen Polymerschichtenverbund, umfassend ein Polymersubstrat und ein erfindungsgemäßes Polymermaterial.

Viele leitfähige Partikel wie zum Beispiel Ruß- oder Metallnanopartikel können als Additive verwendet werden, um als Additive einem Isolatormaterial elektrisch leitende Eigenschaften zu verleihen. Wenn das erhaltene Material gleichzeitig ausreichend leitfähig und flexibel ist, kann es als dehnbare Elektrode in vielfältigen Anwendungen der elektromechanischen Wandlung wie beispielsweise der Aktorik oder der Generatorik eingesetzt werden.

Die Veröffentlichung "Electrode structures in high strain actuator technology" von S. R. Ghaffarian et al., Journal of Optoelectronics and Advanced Materials 2007, 9, 3585-3591, untersucht beispielsweise Elektrodenmaterialien auf der Basis von Graphitpulver, Kohlenstoff gefülltem leitfähigen Schmierfett, Silber-gefülltem leitfähigen Schmierfett und Kohlenstoff gefülltem leitfähigen Gummi.

Das Material Silber wird wegen seiner hohen elektrischen Leitfähigkeit und seiner Stabilität gegenüber Umweltbedingungen bevorzugt verwendet. Die Herstellung von Silber-Nanopartikeln ist grundsätzlich bekannt. Ein Weg ist die direkte chemische Reduktion von gelösten Metallionen in einer flüssigen Phase. Die unterschiedlichen Varianten solcher Verfahren unterscheiden sich hauptsächlich in den Reaktionsbedingungen und Reaktionsdurchführungen. Eine weitere Möglichkeit ist die Synthese von Metalloxid-Nanopartikeln, welche in einem nachfolgenden Schritt reduziert werden.

Um eine Aggregation der Nanopartikel zu vermeiden, können bei ihrer Synthese polymere Dispergierhilfsmittel hinzugefügt werden. Deren Anwesenheit ist jedoch nicht immer erwünscht, wenn die erhaltenen Nanopartikel in Polymere eingearbeitet werden sollen. Weiterhin vermindern solche Dispergierhilfsmittel die elektrische Leitfähigkeit der Nanopartikel umfassenden Systeme, da ein direkter Kontakt der Nanopartikel untereinander zwangsläufig vermindert oder unterbunden wird. Zur Stabilisierung der Nanopartikel ohne solche Hilfspolymere schlägt US 2010/0040863 A1 die Zugabe von Carbonsäuren vor. Im Einzelnen beschreibt diese Patentanmeldung ein Verfahren zur Herstellung von Carbonsäure-stabilisierten Silber-Nanopartikeln, wobei eine Mischung umfassend ein Silbersalz, eine Carbonsäure und ein tertiäres Amin erhitzt wird. Das tertiäre Amin wird hierbei sowohl als Lösungsmittel als auch als Reduktionsmittel eingesetzt. Weiterhin gibt diese Patentanmeldung an, dass Nanopartikel mit Carbonsäuren mit weniger als 12 Kohlenstoffatomen in organischen Lösungsmitteln weniger gut löslich seien als solche, welche Carbonsäuren mit mehr als 12 Kohlenstoffatomen aufweisen. Bei dem hier geschilderten Verfahren liegt allerdings neben den Kosten für das Lösungsmittel die Geruchsbelästigung durch den Einsatz der tertiären Amine auf der Hand.

Eine chemische Reduktion von Metallsalzen zu Nanopartikeln innerhalb einer Oberflächenschicht eines Polymers wird in US 2009/0297829 A1 beschrieben. Diese Patentanmeldung betrifft ein Verfahren zum Einbringen von Metall in Form von Nanopartikeln in die Oberflächenschicht eines polymeren Gegenstandes und den erhaltenen polymeren Gegenstand. Das Verfahren umfasst das Inkontaktbringen wenigstens eines Teils des Gegenstandes mit einer Lösungsmittelmischung enthaltend (a) Wasser und (b) einen Träger gemäß R1-[-O-(CH₂)ₙ]ₘOR₂, wobei R1 und R2 unabhängig voneinander lineares oder verzweigtes C₁₋₈-Alkyl, Benzyl, Benzoyl, Phenyl oder H bedeuten. Der Wert für n beträgt 2 oder 3 und m beträgt 1 bis 35. Die Mischung enthält weiterhin (c) einen Metallvorläufer und optional (d) ein Egalisiermittel. Das Inkontaktbringen wird für eine Zeitdauer durchgeführt, die ausreichend ist, dass wenigstens ein Teil des Metallvorläufers in den Gegenstand infundieren kann, um einen Gegenstand mit einer behandelten Oberflächenschicht zu erhalten. Anschließend wird die Oberflächenschicht mit einem Reduktionsmittel behandelt, um Metall in Form von Nanopartikeln zu erhalten.

Die WO 2005 / 079 353 A2 offenbart eine nanoskalige Metallpaste enthaltend Silbernanopartikel in Matrix beispielsweise umfassend Polyvinylalkohol (PVA) oder Polyvinylbutyral (PVB) als Binder, wobei zur Herstellung der Silbernanopartikel Silbernitrat durch Natriumcitrat und Eisensulfat reduziert wird. Weiters umfasst die Metallpaste Dispersionsstabilisatoren, die eine Agglomeration der Silbernanopartikel verhindern sollen. Als Beispiele für solchen Dispersionsstabilisatoren sind genannt: Fettsäuren, Fischöle, Poly(diallyldimethylammoniumchlorid), Polyacrylsäure und Polystyrolsulfonat. Solche Dispersionsstabilisatoren verhindern die Agglomeration von Silbernanopartikeln sterisch. Wie bereits in Xia et al. in Adv. Mater., 2003, 15, No.9, 695 - 699 beschrieben, haben diese sterischen Dispersionsstabilisatoren den Nachteil, dass sie in den erhaltenen leitfähigen Beschichtungen durch die Oberflächenbelegung der Silberpartikel den direkten Kontakt der Partikel zueinander und damit die Leitfähigkeit der Beschichtung verringern.

Wünschenswert wären jedoch weiterhin Verfahren, die es ermöglichen, Silber-Nanopartikel in Polymere einzuarbeiten, wobei die eine im Vergleich zum Stand der Technik höhere Leitfähigkeit erreicht und erhalten bleiben soll. Ebenso wünschenswert wären solche Silber-Nanopartikel enthaltenden Polymere.

Erfindungsgemäß vorgeschlagen wird daher ein Polymermaterial nach Patentanspruch 1.

Bevorzugt liegt dabei das Gewichtsverhältnis von Polymer zu Silber-Nanopartikeln in einem Bereich von ≥ 20:80 bis ≤ 30:70, besonders bevorzugt in einem Bereich von ≥ 40:60 bis ≤ 45:55.

Die Silber-Nanopartikel sind hierbei erhältlich, indem ein Silbersalz in einem Dispersionsmittel in Gegenwart eines Dispersionsstabilisators mit einem hiervon verschiedenen Reduktionsmittel reduziert wird, wobei der Dispersionsstabilisator ausgewählt ist aus der Gruppe umfassend Carbonsäuren mit ≥ 1 bis ≤ 6 Kohlenstoffatomen, Salze von Carbonsäuren mit ≥ 1 bis ≤ 6 Kohlenstoffatomen, Sulfate und/oder Phosphate.

Das Polymermaterial eignet sich insbesondere zur Herstellung von Polymerelektroden. Der Oberflächenwiderstand des Materials kann im ungedehnten Zustand beispielsweise > 1 Ohm/Square bis < 25 Ohm/Square oder > 1,5 Ohm/Square bis < 5 Ohm/Square betragen. Er lässt sich anhand der Norm ASTM D-257-07 bestimmen.

Mit Bezug auf die Schichtdicke kann der spezifische Oberflächenwiderstand im ungedehnten Zustand beispielsweise > 0,0001 Ohm cm bis < 0,01 Ohm cm oder > 0,0002 Ohm cm bis < 0,0005 Ohm cm betragen. Er lässt sich anhand der Norm ASTM D-257-07 bestimmen.

Die spezifische Leitfähigkeit kann im ungedehnten Zustand beispielsweise ≥ 300 S/cm bis < 6000 S/cm, ≥ 2000 S/cm bis ≤ 5000 S/cm oder ≥ 3000 S/cm bis ≤ 4000 S/cm betragen. Sie lässt sich anhand der Norm ASTM D-257-07 bestimmen.

Mit eingeschlossen in den Begriff "Polymer" sind auch Prepolymere, welche zur Molekulargewichtserhöhung mit Kettenverlängern umgesetzt werden können. Vorzugsweise ist das Polymer aus einer Polymerdispersion erhältlich.

Im Sinne der vorliegenden Erfindung sind Nanopartikel insbesondere solche Partikel mit einem d50-Wert von weniger als 200 nm, bevorzugt weniger als 100 nm, besonders bevorzugt weniger als 60 nm, gemessen mittels dynamischer Lichtstreuung. Für die Messung mittels dynamischer Lichtstreuung eignet sich beispielsweise ein ZetaPlus Zeta Potential Analyzer der Firma Brookhaven Instrument Corporation. Vorzugsweise sind die Partikel sphärisch oder annähernd sphärisch.

Geeignete Silbersalze als Vorläufer der Silber-Nanopartikel sind beispielsweise Acetate, Nitrate, Acetylacetonate, Benzoate, Bromate, Bromide, Carbonate, Chloride, Citrate, Fluoride, Iodate, Iodide, Lactate, Nitrite, Perchlorate, Phosphate, Sulfate, Sulfide und/oder Trifluoroacetate.

Bei der Herstellung der Silber-Nanopartikel kann ein Dispersionsstabilisator und ein hiervon verschiedenes Reduktionsmittel vorliegen. Dieses bedeutet, dass der Dispersionsstabilisator nicht oder nur in unwesentlichem Umfang zur Reduktion der Silbersalze beiträgt. Dieses lässt sich dadurch erreichen, dass ein Reduktionsmittel verwendet wird, dessen Redoxpotential stärker negativ als das entsprechende Potential des Dispersionsstabilisators ist und daher aus thermodynamischen Gründen bevorzugt ist. Ein weiterer Weg ist über eine kinetische Hemmung, indem ein schneller als der Dispersionsstabilisator reagierendes Reduktionsmittel eingesetzt wird. Über die relativen Anteile von Dispersionsstabilisator und Reduktionsmittel sowie über die gewählte Reaktionstemperatur kann auf die thermodynamischen und kinetischen Aspekte Einfluss genommen werden.

Bei den Salzen der Carbonsäuren, vorzugsweise der Mono-, Di- und Tricarbonsäuren, kann es sich bevorzugt um die Alkali- oder Ammoniumsalze, vorzugsweise um die Lithium-, Natrium-, Kalium-oder Tetramethyl-, Tetraethyl- oder Tetrapropylammoniumsalze handeln.

Bei Einsatz der genannten Carbonsäuren als Dispersionsstabilisatoren können diese zur Einstellung des gewünschten pH-Wertes zusammen mit Aminen eingesetzt werden. Als geeignete Amine kommen Monoalkyl-, Dialkyl- oder Dialkanolamine, wie zum Beispiel Diethanolamin, in Frage.

Ein etwaiger Überschuss des oder der elektrostatischen Dispersionsstabilisatoren kann mittels bekannter Reinigungsverfahren, wie beispielsweise Diafiltration, Umkehrosmose und Membranfiltration, entfernt werden.

Die Dispersionsstabilisatoren stabilisieren die Silber-Nanopartikel gegen eine unerwünschte Aggregation nicht durch sterische Hinderung, wie es im Fall von polymeren Dispergierhilfsmitteln der Fall wäre. Vielmehr wirken hier zwischen den Nanopartikeln abstoßende elektrostatische Kräfte, welche den die Aggregation der Partikel fördernden anziehenden van-der-Waals-Kräften entgegenwirken. Dadurch, dass die Oberfläche der Partikel nicht mit sterisch wirkenden Stabilisatoren belegt ist, können die Silber-Nanopartikel und hieraus hergestellte Materialien eine höhere elektrische Leitfähigkeit aufweisen. Damit werden die eingangs bei der WO 2005 / 079 353 A2 erörterten Nachteile überwunden. Wichtig dafür ist auch, dass das Silbersalz durch ein Reduktionsmittel reduziert ist, das vom Dispersionsstabilisator, ausgewählt aus der Gruppe umfassend Carbonsäuren mit ≥ 1 bis ≤ 6 Kohlenstoffatomen, Salze von Carbonsäuren mit > 1 bis ≤ 6 Kohlenstoffatomen, Sulfate und/oder Phosphate, verschieden ist. Die ausgewählten Dispersionsmittel, beispielsweise Zitronensäure oder ein Citrat, wirken also im Wesentlichen nicht der Reduktion, sondern der Dispersion der Silbernanopartikel.

Ein weiterer Vorteil der so erhaltenen Silber-Nanopartikel ist, dass ein thermisches Überführen zu größeren, auch makroskopischen, Strukturen ("annealing") mit entsprechend erhöhter elektrischer Leitfähigkeit bei im Vergleich zu herkömmlich erhaltenen Nanopartikeln deutlich geringeren Temperaturen stattfinden kann. So kann dieses bereits bei 80 °C ablaufen im Vergleich zu über 200 °C bei anderen Nanopartikeln.

Geeignete Reduktionsmittel sind beispielsweise Thioharnstoffe, Hydroxyaceton, Borhydride, Hydrochinon, Ascorbinsäure, Dithionite, Hydroxymethansulfinsäure, Disulfite, Formamidinsulfinsäure, schweflige Säure, Hydrazin, Hydroxylamin, Ethylendiamin, Tetramethylendiamin und/oder Hydroxylaminsulfate. Bevorzugt sind hierbei Borhydride und insbesondere das Natriumborhydrid.

In einer Ausführungsform des erfindungsgemäßen Polymermaterials weisen die Silber-Nanopartikel in dem zu ihrer Herstellung verwendeten Dispersionsmittel in Gegenwart des zu ihrer Herstellung verwendeten Dispersionsstabilisators in einem pH-Bereich von ≥ pH 2 bis ≤ pH 10 ein Zeta-Potential von ≤ -5 mV bis ≥ -40 mV auf. Das Zeta-Potential ist das elektrische Potential an der Abscherschicht eines bewegten Partikels in einer Suspension. Mit anderen Worten ist das Zeta-Potential die Potentialdifferenz zwischen dem Dispersionsmedium und der stationären Fluidschicht auf dem dispergierten Partikel.

Die Höhe dieses Potentials hängt grundsätzlich von dem die Nanopartikel umgebenden Dispersionsmittel, insbesondere den in dem Dispersionsmittel enthaltenen Ionen, und insbesondere von dem pH-Wert des Dispersionsmittels ab.

Die Messung des Zeta-Potentials erfolgt mittels Elektrophorese. Hierzu eignen sich unterschiedliche dem Fachmann bekannte Geräte, wie zum Beispiel solche der Serie ZetaPlus oder ZetaPALS der Firma Brookhaven Instruments Corporation. Die Messung der elektrophoretischen Beweglichkeit von Teilchen erfolgt dabei mittels elektrophoretischer Lichtstreuung (ELS). Das von den im elektrischen Feld bewegten Partikeln gestreute Licht erfährt aufgrund des Doppler-Effektes eine Frequenzänderung, welche zur Bestimmung der Wanderungsgeschwindigkeit herangezogen wird. Zur Messung sehr kleiner Potenziale oder für Messungen in unpolaren Medien oder bei hohen Salzkonzentrationen kann auch die sogenannte "Phase analysis light scattering (PALS)"-Technik (zum Beispiel mit ZetaPALS-Geräten) angewandt werden.

Silber-Nanopartikel mit solchen Zeta-Potentialen weisen eine gute Stabilität gegen Aggregation auf. Sie lassen sich wie bereits geschildert erhalten, indem die genannten Dispersionsstabilisatoren während der Reduktion der Silbersalze eingesetzt werden. Vorzugsweise liegt das Zeta-Potential, gemessen in Wasser, in einem pH-Bereich von ≥ pH 6 bis ≤ pH 8 zwischen < -25 mV und > -40 mV, besonders bevorzugt zwischen zwischen < -25 mV und > -35 mV.

Da das vorgenannte Zeta-Potential abhängig ist von dem die Silber-Nanopartikel umgebenden flüssigen Dispersionsmittel, insbesondere von dem pH-Wert des Dispersionsmittels, und da ein solches Zeta-Potential außerhalb einer solchen Dispersion stark verringert wird, bestehen die vorgenannten abstoßenden elektrostatischen Kräfte bei Entfernung des Dispersionsmittels nicht mehr fort, so dass trotz der hervorragenden Stabilisierung gegen Aggregation der Silber-Nanopartikel in der Dispersion die spätere Leitfähigkeit eines mit der Dispersion hergestellten Materials nicht oder nur unwesentlich beeinträchtigt wird.

In einer weiteren Ausführungsform des erfindungsgemäßen Polymermaterials ist in der Herstellung der Silber-Nanopartikel das Dispersionsmittel ausgewählt aus der Gruppe umfassend Wasser, Alkohole mit ≥ 1 bis ≤ 4 Kohlenstoffatomen, Ethylenglykol, Aldehyde mit ≥ 1 bis ≤ 4 Kohlenstoffatomen und/oder Ketone mit ≥ 3 bis ≤ 4 Kohlenstoffatomen. Ein bevorzugtes Dispersionsmittel ist Wasser. Nichtwässrige Lösungsmittel wie Aceton können zum Beispiel dann eingesetzt werden, wenn eine Polymerlösung mit den Nanopartikeln vermischt werden soll und das Lösungsmittel anschließend entfernt wird.

In einer weiteren Ausführungsform des Polymermaterials ist in der Herstellung der Silber-Nanopartikel der Dispersionsstabilisator Zitronensäure und/oder Citrat. Deren Verwendung ist vorteilhaft, da Zitronensäure bei 153 °C schmilzt und sich bei Temperaturen oberhalb von 175 °C zersetzt. Auf diese Weise kann der Dispersionsstabilisator aus einem fertigen Produkt thermisch entfernt werden.

Vorzugsweise ist in dem erfindungsgemäßen Polymermaterial das Polymer ein Elastomer.

Ist das Polymer ein Elastomer, lassen sich erfindungsgemäße dehnfähige Elektroden realisieren, wie sie in elektromechanischen Wandlern, insbesondere solchen auf der Grundlage von Polymeren, wiederum bevorzugt solchen auf der Grundlage von Elastomeren wie Silikonen, Acrylen, Polyurethanen, Polystyrol, Naturkautschuk, synthetischer Kautschuk, Gummi, Guttapercha oder Latex, zum Einsatz kommen können. So kann als Elastomer-Material beispielsweise das acrylische Elastomer VHB 4910 der Firma 3M verwendet werden, dass Dehnungen bis zu 300 % aushält.

Elektromechanischen Wandler sind beispielsweise aus US 5 977 685A bekannt. Die Elektroden solcher Wandler müssen sich den Längenänderungen des Wandlers anpassen, da die Elektroden ansonsten rissen (insbesondere bei Dehnung) und/oder sich ablösten (insbesondere bei Stauchung). In US 6 583 533 B2 und US 7 518 284 B2 wurde dies dadurch gelöst, dass beispielsweise gewellte Elektroden, beispielsweise solche aus Silber, aufgebracht wurden. Das Aufbringen dieser Elektroden ist aber verfahrenstechnisch aufwändig und teuer. Zudem sind auch die Elektroden wegen des hohen Silberverbrauchs teuer. Durch das erfindungsgemäße Polymermaterial lassen sich flexible und dehnfähige Elektroden verwirklichen, die diese Nachteile nicht aufweisen. In einer weiteren, besonders bevorzugten, Ausführungsform des erfindungsgemäßen Polymermaterials ist das Polymer ein Polyurethan. Hierin mit eingeschlossen sind Polyisocyanurate, Allophanate und andere Reaktionsprodukte von Polyisocyanaten und Polyisocyanat-Prepolymeren mit Polyolen und/oder Polyaminen. Eine bevorzugte Gruppe von Polyurethanen sind Polyurethan-Gießelastomere. Nach dem Vermischen mit den Silber-Nanopartikeln können die Elastomere thermisch ausgehärtet werden und dabei gleichzeitig die Nanopartikel zu größeren Einheiten überführt werden. Eine weitere bevorzugte Form des Polyurethans ist, wenn es wässrige Emulsionen bilden und nach Trocknung zu einem Film koaleszieren kann. Auf diese Weise lassen sich Gemische einer wässrigen Polyurethandispersion und einer wässrigen Silber-Nanopartikeldispersion herstellen, welche beispielsweise durch Sprühen oder rakeln auf ein Substrat aufgetragen werden können. Nach dem Entfernen des Wassers erhält man ein erfindungsgemäßes Polymermaterial.

Beispiele für Polyurethane, die erfindungsgemäß verwendet werden können, sind wässrige Polyurethane dispersionen, beispielsweise hydroxyfunktionelle Polyurethandispersionen wie Bayhydrol U,: hochmolekulare Polyurethandispersionen (PUD) wie Bayhydrol® UH, Polyurethan-Polyacrylat-Hybriddispersionen (PUR-PAC-Dispersionen), wie Bayhydrol® UA, PolyurethanDispersionen für Textilbeschichtungen, wie Impranil®, bevorzugt anionische aliphatische Polyetherurethan-Dispersion wie Impranil 43032, Impranil® DLH, Impranil® DLN, Impranil® DLN-SD, Impranil® DLN W 50, Impranil® DLP, Impranil® LP RSC 3040 oder Impranil® LP RSC 4002, anionische, aromatische Polyetherpolyurethan-Dispersion wie Impranil XP 2745 oder, Impranil® XP 27), wobei die verschiedenen Impranielvarianten wegen ihrer niedrigen Viskozität und hohen Elastizität bevorzugt sind. Insbesondere bevorzugt ist Impranil LP DSB 1069.

In einer Ausführungsform wird das Polyurethan erhalten aus einer Reaktionsmischung umfassend die folgenden Komponenten:
A) ein Polyisocyanat,
B) ein Polyisocyanat-Prepolymer
C) eine Verbindung mit mindestens zwei isocyanatreaktiven Hydroxygruppen.

Als Polyisocyanat und Komponente A) eignen sich beispielsweise 1,4-Butylendiisocyanat, 1,6 Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

In einer Ausführungsform kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Besonders bevorzugt können als Komponente A) Polyisocyanate auf der Basis von Hexamethylendiisocyanat, Isophorondiisocyanat oder die isomeren Bis-(4,4'-isocyanatocyclohexyl) methane sowie Mischungen der vorgenannten Diisocyanate eingesetzt werden.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH2- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Bevorzugt sind dabei als Komponente B) Polyisocyanat-Prepolymere auf Basis von Polypropylenglykol als Polyol und Hexamethylendiisocyanat als aliphatischem Diisocyanat.

Hydroxyfunktionelle, polymere Polyole für die Umsetzung zum Polyisocyanat-Prepolymer B) können beispielsweise auch Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri-und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dirnethylbernsteinsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewichten Mn von 400 g/mol bis 8000 g/mol, bevorzugt von 600 g/mol bis 3000 g/mol eingesetzt werden. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten, werden in bekannter Weise derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1 ,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mn von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-s-hydroxy-capronsäureester, ω-Hydroxyhexyl-γ-hydroxybuttersäureester, Adipinsäure-(β-hydroxyethyl)ester oder Terephthalsäurebis(β-hydroxyethyl)-ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykolmonomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH2- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-l-cyclohexylaminopropan, 3 -Amino-l-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketim von diprimären Ammen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 2,5 aufweisen.

Die Komponente C) ist eine Verbindung mit mindestens zwei isocyanatreaktiven Hydroxygruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole eingesetzt werden. Beispielsweise eignen sich Polytetramethylenglykolpolyether, wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist. Bevorzugt haben die polymeren Polyole aus C) eine besonders enge Molekulargewichtsverteilung, das heißt eine Polydispersität (PD = Mw/Mn) von 1,0 bis 1,5 und/oder eine OH-Funktionalität von größer 1,9. Bevorzugt weisen die genannten Polyetherpolyole eine Polydispersität von 1,0 bis 1,5 und eine OH-Funktionalität von größer 1,9 auf, besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A), B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02:bis 1:0,95.

Vorzugsweise besitzt zumindest eine der Komponenten A), B) oder C) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH-Gruppen pro Molekül. Diese Verzeigung beziehungsweise Vernetzung bewirkt bessere mechanische Eigenschaften und bessere elastomere Eigenschaften, insbesondere auch bessere Dehnungseigenschaften

Das Polyurethan kann vorteilhafterweise eine gute mechanische Festigkeit und hohe Elastizität aufweisen. Insbesondere kann das Polyurethan eine maximale Spannung von ≥ 0,2 MPa, insbesondere von 0,4 MPa bis 50 MPa, und eine maximale Dehnung von ≥ 250 %, insbesondere von ≥ 350 %, aufweisen. Darüber hinaus kann das Polyurethan im Gebrauchsdehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach DIN 53504). Ferner kann das Polyurethan ein Elastizitätsmodul bei einer Dehnung von 100 % von 0,1 MPa bis 10 MPa, beispielsweise von 0,2 MPa bis 5 MPa, aufweisen (Bestimmung nach DIN EN 150 672 1-1).

Die Reaktionsmischung kann neben den Komponenten A), B) und C) zusätzlich auch Hilfs- und Zusatzstoffe enthalten. Beispiele für solche Hilfs- und Zusatzstoffe sind Vernetzer, Verdicker, Colösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. In einer weiteren Ausführungsform des Polymermaterials beträgt das Gewichtsverhältnis von Polymer zu Silber-Nanopartikeln ≥ 10:90 bis ≤ 50:50. Das Verhältnis kann auch in einem Bereich von ≥ 20:80 bis ≤ 30:70 liegen. Ohne auf eine Theorie festgelegt zu sein wird angenommen, dass bei solchen Gewichtsanteilen die Perkolationsschwelle für die Silber-Nanopartikel deutlich überschritten ist, ohne dass übermäßig viel Material eingesetzt werden muss.

Beschrieben ist weiterhin ein Verfahren zur Herstellung eines Polymermaterials, welches ein Polymer und in dem Polymer dispergierte Silber-Nanopartikel umfasst, wobei das Verfahren die Schritte umfasst:
Bereitstellen eines Polymers;
Bereitstellen von Silber-Nanopartikeln, welche erhältlich sind, indem ein Silbersalz in einem Dispersionsmittel in Gegenwart eines Dispersionsstabilisators mit einem hiervon verschiedenen Reduktionsmittel reduziert wird, wobei der Dispersionsstabilisator ausgewählt ist aus der Gruppe umfassend Carbonsäuren mit ≥ 1 bis ≤ 6 Kohlenstoffatomen, Salze von Carbonsäuren mit ≥ 1 bis ≤ 6 Kohlenstoffatomen, Sulfate und/oder Phosphate; und
Vermischen des Polymers und der Silber-Nanopartikel.

Details zu den Komponenten wurden bereits im Zusammenhang mit dem erfindungsgemäßen Polymermaterial beschrieben, so dass sich zur Vermeidung von Wiederholungen hierauf bezogen wird.

In einer Ausführungsform des beschriebenen Verfahrens weisen die Silber-Nanopartikel in dem zu ihrer Herstellung verwendeten Dispersionsmittel in Gegenwart des zu ihrer Herstellung verwendeten Dispersionsstabilisators in einem pH-Bereich von ≥ pH 2 bis ≤ pH 10 ein Zeta-Potential von ≤ -5 mV bis ≥ -40 mV auf. Details hierzu wurden bereits vorstehend beschrieben.

In einer weiteren Ausführungsform des beschriebenen Verfahrens ist in der Herstellung der Silber-Nanopartikel der Dispersionsstabilisator Zitronensäure und/oder Citrat. Details hierzu wurde bereits vorstehend beschrieben.

In einer weiteren Ausführungsform des beschriebenen Verfahrens ist das Polymer ein Elastomer, bevorzugt ein Silikon, Acryl, Polyurethan, Polystyrol, Naturkautschuk, synthetischer Kautschuk, Gummi, Guttapercha oder Latex. Details hierzu wurden bereits vorstehend beschrieben.

In einer weiteren Ausführungsform des beschriebenen Verfahrens liegen das Polymer und die Silber-Nanopartikel in einem Dispersionsmittel dispergiert vor. Dann können zwei flüssige Phasen miteinander gemischt werden. Hierdurch erhält man eine homogene Verteilung der Silber-Nanopartikel.

Vorteilhafterweise sind die Dispersionsmittel für das Polymer und für die Silber-Nanopartikel unabhängig voneinander ausgewählt aus der Gruppe umfassend Wasser, Alkohole mit ≥ 1 bis ≤ 4 Kohlenstoffatomen, Ethylenglykol, Aldehyde mit ≥ 1 bis ≤ 4 Kohlenstoffatomen und/oder Ketone mit ≥ 3 bis ≤ 4 Kohlenstoffatomen. Wie bereits vorstehend geschildert ist es bevorzugt, dass Wasser das gemeinsame Dispersionsmittel ist.

In einer weiteren Ausführungsform des beschriebenen Verfahrens umfasst dieses weiterhin den Schritt des Erwärmens der erhaltenen Mischung umfassend Polymer und Silber-Nanopartikel auf eine Temperatur von ≥ 30 °C bis ≤ 180 °C. Vorzugsweise beträgt diese Temperatur ≥ 50 °C bis ≤ 150 °C und besonders bevorzugt ≥ 80 °C bis ≤ 100 °C. Wie bereits erwähnt können bei solch niedrigen Temperaturen die verwendeten Silber-Nanopartikel schon zu größeren und elektrisch noch besser leitfähigen Strukturen umgewandelt werden. Weiterhin kann dann gleichzeitig ein aus einer Polymerdispersion erhaltener Film getrocknet werden oder ein Gießelastomer ausgehärtet werden.

Das erfindungsgemäße Polymermaterial kann insbesondere als flexible und/oder dehnbare Elektrode verwendet werden. Daher ist ein weiterer Gegenstand der vorliegenden Erfindung eine dehnbare und/oder flexible Elektrode umfassend ein Polymermaterial nach einem der Ansprüche 1 bis 5.

Denkbare Anwendungen des erfindungsgemäßen Polymermaterials und der dieses umfassende dehnbaren und/oder flexiblen Elektroden liegen insbesondere im Bereich der elektromechanischen Wandler. Daher ist ein weiterer Gegenstand der vorliegenden Erfindung ein Polymerschichtenverbund, umfassend ein Polymersubstrat und ein Polymermaterial gemäß einem der Ansprüche 1 bis 5. Vorzugsweise handelt es sich bei dem Material des Polymersubstrats um ein dielektrisches Elastomer, besonders bevorzugt ist das Polymersubstrat flexibel. Es ist weiterhin bevorzugt, dass das Polymersubstrat auf zwei sich gegenüberliegenden Seiten mit dem erfindungsgemäßen Polymermaterial versehen ist. Dabei kann das Polymermaterial auf das Polymersubstrat mittels Rakeln, Tiefdruck, Sprühen, Tauchen, Siebdruck aufgebracht werden. Damit das erfindungsgemäße Polymermaterial besser auf dem Polymermaterial haftet, können ihm beispielsweise Wasser und/oder ein Tensid zugegeben werden.

Vorzugweise folgt danach ein Sinterprozess; dieser kann über Temperatur oder Photonic Sintering bewerkstelligt werden.

Die Methode wurde bereits in US20080020304 A1 beschrieben. Der Mechanismus des photonischen Sinterns beruht darauf, dass metallische Nanopartikel im Gegensatz zu dem Polymersubstrat sehr stark die photonische Strahlung absorbieren und somit Energie, die zum Versintern der Nanopartikel bei niedrigen Temperaturen führen. Da die Nanopartikel eine niedrigere Neigung zur Reflektion sowie zur thermischen Leitfähigkeit aufweisen, wird durch diesen Prozess die Polymermatrix, die kaum photonische Strahlung adsorbieren kann, nicht beschädigt. Besonders vorteilhaft erweisen sich gepulste photonische Quellen, die in sehr kurzer Zeit die Partikel auf hohe Temperaturen erhitzen. Dies können Gamma-, Röntgen-Strahlung oder ultraviolettes, sichtbares, Infrarotes Licht bzw. Mikrowellen, Radiowellen oder eine Kombination der unterschiedlichen Strahlungen sein.

Das erfindungsgemäße Polymermaterial kann das Polymersubstrat zumindest teilweise kontaktieren. Es ist aber auch möglich, dass zwischen dem Polymersubstrat und dem Polymermaterial noch weitere Schichten wie beispielsweise Klebstoffschichten vorhanden sind.

Die vorliegende Erfindung wird anhand der nachfolgenden Beispiele in Verbindung mit den Figuren 1 bis 3 weiter erläutert, ohne jedoch darauf beschränkt zu sein.
FIG. 1 zeigt den Verlauf des elektrischen Widerstands im Spannungs-DehnungsDiagramm
FIG. 2 zeigt das Verhalten der spezifischen Leitfähigkeit mit zunehmender Dehnung
FIG. 3 zeigt ein weiteres Verhalten der spezifischen Leitfähigkeit mit zunehmender Dehnung

### Beispiel 1: Herstellung einer Silber-Nanopartikeldispersion

In einem Kolben mit 2 Liter Fassungsvermögen wurde 1 Liter destilliertes Wasser vorgelegt. Es wurden dann zunächst 100 mL einer 0,7 Gewichts-%igen wässrigen Lösung von Tri-Natriumcitrat und anschließend 200 mL einer 0,2 Gewichts-%igen wässrigen Lösung von Natriumborhydrid unter Rühren zugegeben. Die erhaltene Mischung wurde unter Rühren über einen Zeitraum von 1 Stunde mit einer 0,045 molaren wässrigen Lösung von Silbernitrat versetzt, wobei der Volumenstrom 0,2 L/Stunde betrug. Hierbei bildete sich eine Dispersion von Silber-Nanoteilchen. Diese wurde durch Diafiltration gereinigt und aufkonzentriert.

Die resultierende Dispersion wurde zur Charakterisierung im Verhältnis von 1:200 mit Wasser verdünnt und in 7 Proben der pH-Wert mit konz. NaOH-Lösung eingestellt. Für verschiedene pH-Werte wurden Zeta-Potentiale ermittelt. Angegeben sind der pH-Wert und in Klammern das Zeta-Potential in mV: pH 10 (-43,9 mV); pH 8,8 (-34,2 mV); pH 7,5 (-38,3 mV); pH 6,3 (-29,1 mV); pH 4,9 (-23,3 mV); pH 2,4 (-23,7 mV)

Alle Messungen der Proben wurden je dreimal ausgeführt und eine dabei resultierende Standardabweichung von ± 0,5 ermittelt. Die Messung des Zeta-Potentials erfolgte mit einem Gerät vom Typ Brookhaven Instruments Corporation 90 Plus mit ZetaPlus Particle Sizing Software Version 3.59. Gemessen wurde in einer Dispersion mit einem Feststoffgehalt von 0,05 Gewichts-% bezogen auf das Gesamtgewicht der zu vermessenden Probe.

### Beispiel 2: Herstellung eines erfindungsgemäßen Polymermaterials und Beschichten eines Substrats

In einem Rundkolben wurden 10 g einer Silber-Nanopartikeldispersion gemäß Beispiel 1 (Feststoffgehalt: 17 Gewichts-% in Wasser) mit 2 g einer wässrigen Polyurethan-Dispersion (Feststoffgehalt: 50 Gewichts-% in Wasser) vermischt. Weiterhin wurde 1 g einer Additivmischung hinzugefügt (Additivmischungsansatz: 40 g Wasser, 0,3 g Triton®-X (nichtionisches Tensid, Octylphenolethoxylat) und 0,2 g Hydroxyethylcellulose). Die relativen Feststoffanteile betrugen 37% Polyurethan und 63% Silber-Nanopartikel. Die Mischung wurde für 1 Stunde bei Raumtemperatur gerührt und danach für 30 Minuten in einem Ultraschallbad behandelt. Als zu beschichtendes Substrat wurde ein dielektrisches Polyurethan-Elastomer ausgewählt. Die zuvor erhaltene Mischung wurde mit einer Nassschichtdicke von 75 µm auf das Substrat aufgerakelt. Anschließend wurde die beschichtete Probe für 30 Minuten bei 80 °C in einem Ofen getrocknet. Die Filmdicke wurde mittels eines Profilometers zu 1,1 µm bestimmt.

Mittels einer Vierpunkt-Messanordnung vom Typ SD-600 der Firma NAGY Mess-Systeme wurde der Oberflächenwiderstand der ungedehnten Probe gemäß ASTM D-257-07 gemessen, wobei ein Wert von 21 Ohm/Square erhalten wurde. Der berechnete spezifische Oberflächenwiderstand im Bezug auf die gemessene Filmdicke betrug 0,00234 Ohm cm und die spezifische Leitfähigkeit betrug 428 S/cm.

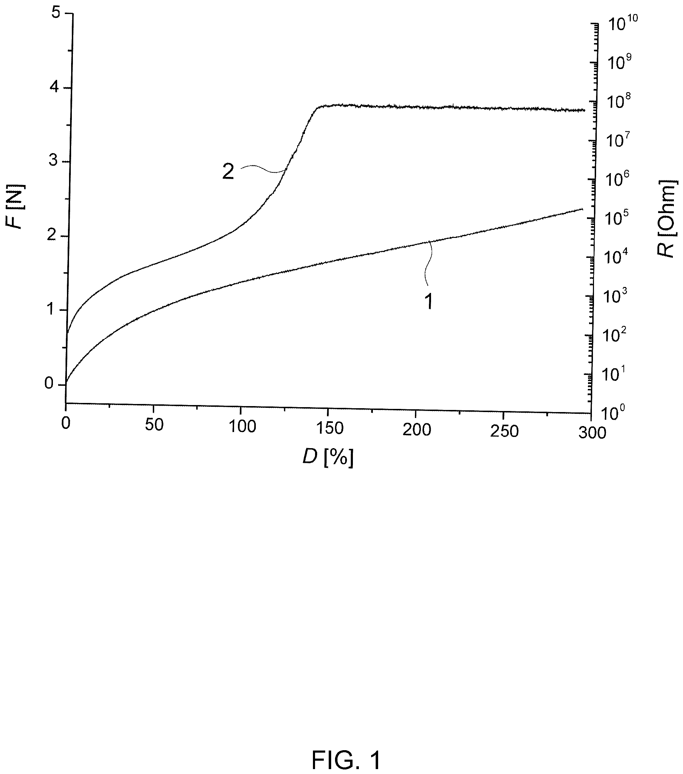

Die Flexibilität des erhaltenen Schichtenverbundes wurde in einer Spannungs-Dehnungs-Messung gemäß FIG. 1 überprüft. Hierbei zeigt Kurve 1 den Verlauf der Kraft F bei zunehmender Dehnung D. Die Kurve 2 zeigt den korrespondierenden Verlauf des elektrischen Widerstands R in Abhängigkeit von der Dehnung D.

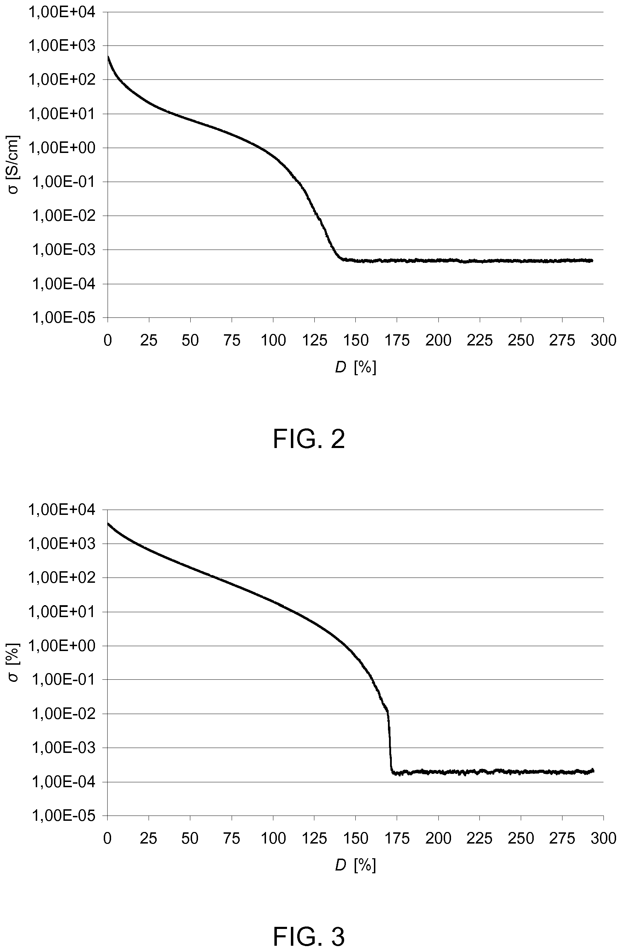

In FIG. 2 ist die spezifische Leitfähigkeit σ in Abhängigkeit von der Dehnung D aufgetragen. Es sei beispielhaft hervorgehoben, dass bis zu einer Dehnung von ca. 90% eine spezifische Leitfähigkeit von 1 S/cm oder mehr erreicht wird.

### Beispiel 3: Herstellung eines erfindungsgemäßen Polymermaterials und Beschichten eines Substrats

In einem Rundkolben wurden 9,1 g einer Silber-Nanopartikeldispersion gemäß Beispiel 1 (Feststoffgehalt: 17 Gewichts-% in Wasser) mit 0,9 g einer wässrigen Polyurethan-Dispersion (Feststoffgehalt: 50 Gewichts-% in Wasser) vermischt. Weiterhin wurden 0,4 g einer Additivmischung (Additivmischungsansatz: 40 g Wasser, 0,3 g Triton®-X (nichtionisches Tensid, Octylphenolethoxylat) und 0,2 g Hydroxyethylcellulose) und 0,08 g Ethylenglycol hinzugefügt. Die relativen Feststoffanteile betrugen 22% Polyurethan und 77% Silber-Nanopartikel. Die Mischung wurde für 1 Stunde bei Raumtemperatur gerührt und danach für 30 Minuten in einem Ultraschallbad behandelt. Als zu beschichtendes Substrat wurde ein dielektrisches Polyurethan-Elastomer ausgewählt. Die zuvor erhaltene Mischung wurde drei Mal hintereinander mittels einer Sprühpistole mit 0,3 mm Düsenansatz bei 2 mbar Druck auf das Substrat aufgebracht. Anschließend wurde die beschichtete Probe für 2 Stunden bei 80 °C in einem Ofen getrocknet. Die Filmdicke wurde mittels eines Profilometers zu 3 µm bestimmt.

Mittels einer Vierpunkt-Messanordnung wurde der Oberflächenwiderstand der ungedehnten Probe gemäß ASTM D-257-07 gemessen, wobei ein Wert von 1,75 Ohm/Square erhalten wurde. Der berechnete spezifische Oberflächenwiderstand im Bezug auf die gemessene Filmdicke betrug 0,0002 Ohm cm und die spezifische Leitfähigkeit betrug 5714 S/cm.

In FIG. 3 ist die spezifische Leitfähigkeit σ in Abhängigkeit von der Dehnung D aufgetragen. Es sei beispielhaft hervorgehoben, dass bis zu einer Dehnung von ca. 140% eine spezifische Leitfähigkeit von 1 S/cm oder mehr erreicht wird.

## Patentansprüche

1. Polymermaterial für eine dehnbare und/oder flexible Elektrode, umfassend ein Polymer und in dem Polymer dispergierte Silber-Nanopartikel, **dadurch gekennzeichnet, dass** das Polymer ein Elastomer, bevorzugt ein Polyurethan, Silikon, Acryl, Polystyrol, Naturkautschuk, synthetischer Kautschuk, Gummi, Guttapercha oder Latex ist und das Gewichtsverhältnis von Polymermaterial zu Silber-Nanopartikeln in einem Bereich von ≥ 10:90 bis ≤ 50:50 liegt.

2. Polymermaterial nach Anspruch 1, **dadurch gekennzeichnet, dass** die Silber-Nanopartikel erhältlich sind, indem ein Silbersalz in einem Dispersionsmittel in Gegenwart eines Dispersionsstabilisators mit einem hiervon verschiedenen Reduktionsmittel reduziert wird, wobei der Dispersionsstabilisator ausgewählt ist aus der Gruppe umfassend Carbonsäuren mit ≥ 1 bis ≤ 6 Kohlenstoffatomen, Salze von Carbonsäuren mit ≥ 1 bis ≤ 6 Kohlenstoffatomen, Sulfate und/oder Phosphate.

3. Polymermaterial gemäß Anspruch 1, **dadurch gekennzeichnet, dass** die Silber-Nanopartikel in dem zu ihrer Herstellung verwendeten Dispersionsmittel in Gegenwart des zu ihrer Herstellung verwendeten Dispersionsstabilisators in einem pH-Bereich von ≥ pH 2 bis ≤ pH 10 ein Zeta-Potential von ≤ -5 mV bis ≥ -40 mV aufweisen.

4. Polymermaterial gemäß einem der Ansprüche 1 bis 3, **dadurch gekennzeichnet, dass** in der Herstellung der Silber-Nanopartikel das Dispersionsmittel ausgewählt ist aus der Gruppe umfassend Wasser, Alkohole mit ≥ 1 bis ≤ 4 Kohlenstoffatomen, Ethylenglykol, Aldehyde mit ≥ 1 bis ≤ 4 Kohlenstoffatomen und/oder Ketone mit ≥ 3 bis ≤ 4 Kohlenstoffatomen.

5. Polymermaterial gemäß einem der Ansprüche 1 bis 4, **dadurch gekennzeichnet, dass** in der Herstellung der Silber-Nanopartikel der Dispersionsstabilisator Zitronensäure und/oder Citrat ist.

6. Dehnbare und/oder flexible Elektrode umfassend ein Polymermaterial nach einem der Ansprüche 1 bis 5.

7. Polymerschichtenverbund, umfassend ein Polymersubstrat und ein Polymermaterial gemäß einem der Ansprüche 1 bis 5.

8. Verwendung eines Polymermaterials gemäß einem der Ansprüche 1 bis 5 zur Herstellung einer flexiblen und/oder dehnbaren Elektrode.

## Claims

1. Polymer material for an extendible and/or flexible electrode, comprising a polymer and silver nanoparticles dispersed in the polymer, **characterised in that** the polymer is an elastomer, preferably a polyurethane, silicone, acrylic, polystyrene, natural rubber, synthetic rubber, rubber, gutta percha or latex and the weight ratio of polymer material to silver nanoparticles is in a range of ≥ 10:90 to ≤ 50:50.

2. Polymer material according to Claim 1, **characterised in that** the silver nanoparticles are obtainable by reducing a silver salt in a dispersant in the presence of a dispersion stabiliser with a reducing agent that is different thereto, wherein the dispersion stabiliser is selected from the group comprising carboxylic acids ≥ 1 to ≤ 6 carbon atoms, salts of carboxylic acids with ≥ 1 to ≤ 6 carbon atoms, sulphates and/or phosphates.

3. Polymer material according to Claim 1, **characterised in that** the silver nanoparticles in the dispersant used for its production in the presence of the dispersion stabiliser used for its production comprise a zeta potential of ≤ -5 mV to ≥ -40 mV in a pH range of ≥ pH 2 to ≤ pH 10.

4. Polymer material according to any one of Claims 1 to 3, **characterised in that** in the production of the silver nanoparticles, the dispersant is selected from the group comprising water, alcohols with ≥ 1 to ≤ 4 carbon atoms, ethylene glycol, aldehydes with ≥ 1 to ≤ 4 carbon atoms and/or ketones with ≥ 3 to ≤ 4 carbon atoms.

5. Polymer material according to any one of Claims 1 to 4, **characterised in that** in the production of the silver nanoparticles, the dispersion stabiliser is critic acid and/or citrate.

6. Extendible and/or flexible electrode comprising a polymer material according to any one of Claims 1 to 5.

7. Polymer layer composite, comprising a polymer substrate and a polymer material according to any one of Claims 1 to 5.

8. Use of a polymer material according to any one of Claims 1 to 5 for producing a flexible and/or extendible electrode.

## Revendications

1. Matériau polymère pour une électrode extensible et/ou flexible, comprenant un polymère et, dans le polymère, des nanoparticules d'argent dispersées, **caractérisé en ce que** le polymère est un élastomère, de préférence il est un polyuréthane, silicone, acrylique, polystyrène, caoutchouc naturel, caoutchouc synthétique, caoutchouc, gutta-percha ou latex et le rapport en poids du matériau polymère par rapport aux nanoparticules d'argent se situe dans une gamme ≥ 10:90 et ≤ 50:50.

2. Matériau polymère selon la revendication 1, **caractérisé en ce que** les nanoparticules d'argent sont obtenues par un procédé de réduction d'un sel d'argent dans un agent de dispersion en présence d'un stabilisant de dispersion avec un agent de réduction différent, où le stabilisant de dispersion est sélectionné parmi le groupe comprenant des acides carboxyliques avec des atomes de carbone ≥ 1 et ≤ 6, des sels d'acides carboxyliques avec des atomes de carbone ≥ 1 et ≤ 6, des sulfates et/ou des phosphates.

3. Matériau polymère selon la revendication 1, **caractérisé en ce que** les nanoparticules d'argent présentent, dans l'agent de dispersion utilisé pour leur production en présence du stabilisant de dispersion utilisé pour leur production, dans une gamme de pH ≥ pH 2 et ≤ pH 10, un potentiel zêta de ≤ -5 mV à ≥ -40 mV.

4. Matériau polymère selon l'une des revendications 1 à 3, **caractérisé en ce que** pour la production des nanoparticules d'argent l'agent de dispersion est sélectionné parmi le groupe comprenant de l'eau, des alcools avec des atomes de carbone ≥ 1 et ≤ 4, de l'alcool éthylénique, des aldéhydes avec des atomes de carbone ≥ 1 et ≤ 4 et/ou des cétones avec des atomes de carbone ≥ 3 et ≤ 4.

5. Matériau polymère selon l'une des revendications 1 à 4, **caractérisé en ce, que** pour la production des nanoparticules d'argent, le stabilisant de dispersion est de l'acide citrique et/ou du citrate.

6. Électrode extensible et/ou flexible, comprenant un matériau polymère selon l'une des revendications 1 à 5.

7. Ensemble de couches polymères, comprenant un substrat polymère et un matériau polymère selon l'une des revendications 1 à 5.

8. Utilisation d'un matériau polymère selon l'une des revendications 1 à 5 pour la production d'une électrode extensible et/ou flexible.
